# EUROPEAN PATENT APPLICATION

(11) **EP 4 561 105 A2**
(43) Date of publication of application: **28.05.2025**
(21) Application number: 24213379.1
(22) Date of filing: 15.11.2024
(51) Int. Cl.: H04R 1/40, H04R 3/12, B60Q 5/00, B60R 21/00

(54) **SPEAKER SYSTEM**

(30) Priority: 24.11.2023 JP 2023198899
(71) Applicant: Alps Alpine Co., Ltd., Ota-ku, Tokyo 145-8501 (JP)
(72) Inventor: UESUGI, Haruki, Iwaki, Fukushima (JP)
(74) Representative: Schmitt-Nilson Schraud Waibel Wohlfrom Patentanwälte Partnerschaft mbB

(57) **Abstract**

A speaker system includes an output sound generator configured to generate a sound to be output, a speaker array including a plurality of speakers to which the sound generated by the output sound generator can be selectively input, a speaker switcher configured to switch one or more speakers to which the generated sound is input, and a switching instructor configured to instruct the speaker switcher in accordance with a width of directivity of a sound that is output from the speaker array.

## Description

The present disclosure relates to a speaker system in which a plurality of speakers are combined.

A vehicle presence notification device is known that uses a speaker array in which a plurality of ultrasonic speakers are combined, and is configured to change the directivity of a notification sound by adjusting a phase of a sound wave that is output from each ultrasonic speaker to (for example, see JP 2011-31695 A).

The present disclosure relates to a speaker system according to the appended claims. Embodiments are disclosed in the dependent claims. According to an embodiment of the present disclosure, a speaker system includes an output sound generator configured to generate a sound to be output, a speaker array including a plurality of speakers to which the sound generated by the output sound generator can be selectively input, a speaker switcher configured to switch one or more speakers to which the generated sound is input, and a switching instructor configured to instruct the speaker switcher in accordance with a width of directivity of a sound that is output from the speaker array.
FIG. 1 is a diagram illustrating a configuration of a vehicle approach notification device according to an embodiment;
FIG. 2 is a diagram illustrating an exemplary configuration of a speaker array;
FIGS. 3A and 3B are exemplary diagrams explaining a correspondence between a width of directivity and speakers to use;
FIGS. 4A and 4B are explanatory diagrams of a sound field when directivity is switched;
FIG. 5A is a diagram illustrating a modified example of an area N that is set in the speaker array;
FIG. 5B is a diagram illustrating the same area W as illustrated in FIG. 3B;
FIG. 6A is a diagram illustrating another modified example of an area N that is set in the speaker array;
FIG. 6B is a diagram illustrating the same area W as illustrated in FIG. 3B;
FIG. 7A is a diagram illustrating the same area N as illustrated in FIG. 3A;
FIG. 7B is a diagram illustrating a modified example of an area W that is set in the speaker array;
FIG. 8A is a diagram illustrating another modified example of the area N that is set in the speaker array;
FIG. 8B is a diagram illustrating another modified example of the area W that is set in the speaker array;
FIG. 9 is a diagram illustrating a specific example of a case where directivity of the speaker array is switched in accordance with a traveling speed of a vehicle;
FIG. 10 is a diagram illustrating a specific example of a case where directivity of the speaker array is switched depending on whether a vehicle is traveling in an urban area or in a suburban area;
FIG. 11 is a diagram illustrating a specific example of a case where a surrounding situation is determined based on an image obtained by imaging the surrounding; and
FIG. 12 is a diagram illustrating a modified example in which directivity of the speaker array is varied according to a congestion state of a room.

The above-described vehicle presence notification device disclosed in JP 2011-31695 A can change the directivity of the entire speaker array by adjusting the phase of a sound wave that is output from each speaker constituting the speaker array but cannot change the output range of a notification sound. For example, the above-described vehicle presence notification device is not capable of switching between outputting a sound to a distant area and outputting a sound for a wide range around a vehicle in accordance with a situation of the moving vehicle.

The present disclosure has been made in view of the above circumstances and provides a speaker system capable of switching an output range of sound.

A speaker system according to an aspect of the present disclosure includes an output sound generator for generating a sound to be output, a speaker array including a plurality of speakers to which the sound generated by the output sound generator can be selectively input, a speaker switcher for switching one or a plurality of speakers to which the generated sound is input, and a switching instructor for instructing the speaker switcher to switch in accordance with a directivity of a sound output from the speaker array. Particularly, the speaker switcher selectively switches between a first area having a large area and a large number of speakers and a second area having a small area and a small number of speakers.

Using the speakers included in the small area among a plurality of speakers constituting the speaker array widens the directivity of the speaker array, and using the speakers included in the large area narrows the directivity of the speaker array, and thus it is possible to switch the output range of a sound radiated from the speaker array by switching the area where the speakers are arranged.

Furthermore, it is preferable that the speaker system further includes a surrounding situation determiner and the switching instructor instructs the speaker switcher to switch the directivity based on a determination made by the surrounding situation determiner. Thus, directivity can be automatically switched between a wide range and a narrow range in accordance with a surrounding situation.

It is preferable that the speaker system is mounted on a vehicle and configured to output a sound that notifies people in the vicinity of the vehicle of approach of the vehicle, that the surrounding situation determiner is a speed information acquirer for acquiring a traveling speed of a vehicle, and that the switching instructor instructs the speaker switcher to select between a first area in a case of a high traveling speed so that the directivity of a sound output from the speaker array becomes narrow and a second area in a case of a low traveling speed so that the directivity becomes wide. Thus, when the vehicle travels at a low speed, the sound for informing the approach can be widely heard by pedestrians or the like in the vicinity of the vehicle, and when the vehicle travels at a medium speed or higher, the sound for informing presence of an approaching vehicle can be heard by pedestrians or the like who are present at a slightly distant place.

It is preferable that the speaker system is mounted on a vehicle and configured to output a sound notifying people in the vicinity of the vehicle of approach of the vehicle, that the surrounding situation determiner is a traveling environment determiner for determining whether the vehicle is traveling is in an urban area or in a suburban area, and the switching instructor instructs the speaker switcher to select, in a case of determining the traveling position of the vehicle to be a suburban area, a first area to narrow the directivity of a sound to be output from the speaker array, and in a case of determining the traveling position of the vehicle to be an urban area, select the second area to widen the directivity of a sound to be output from the speaker array. Thus, in an urban area where there is a high possibility that many pedestrians or the like are present in the vicinity of the vehicle, the pedestrians or the like in the vicinity of the vehicle as many as possible can be made to hear the sound for notifying the pedestrians of the approach, and in a suburban area where there are a relatively few people, the pedestrians or the like who are present at a slightly distant place can be made to hear the sound for notifying the pedestrians of the approach.

It is preferable that the switching instructor instructs the speaker switcher to alternately select the first area and the second area. This allows a sound radiated from the speaker array to be heard in both the near and distant spaces around the vehicle.

It is preferable that the surrounding situation determiner includes an imager for imaging the surrounding and an image analyzer for analyzing a surrounding situation based on the image obtained by the imager, and the switching instructor instructs the speaker switcher to select either the first area or the second area based on the surrounding situation analyzed by the image analyzer. This allows the speaker system to ascertain a surrounding situation accurately and to switch the directivity of the sound radiated from the speaker array between a wide range and a narrow range.

It is preferable that the surrounding situation determiner is a congestion state determiner for determining a congestion state of the surroundings, and the switching instructor instructs the speaker switcher to select either the first area or the second area based on the congestion state of the surroundings determined by the congestion state determiner. This allows the speaker system to switch the directivity of the sound radiated from the speaker array between a wide range and a narrow range in accordance with a congestion state of the surroundings.

Hereinafter, a vehicle approach notification device according to embodiments to which a speaker system of the present disclosure is applied will be described with reference to the drawings.

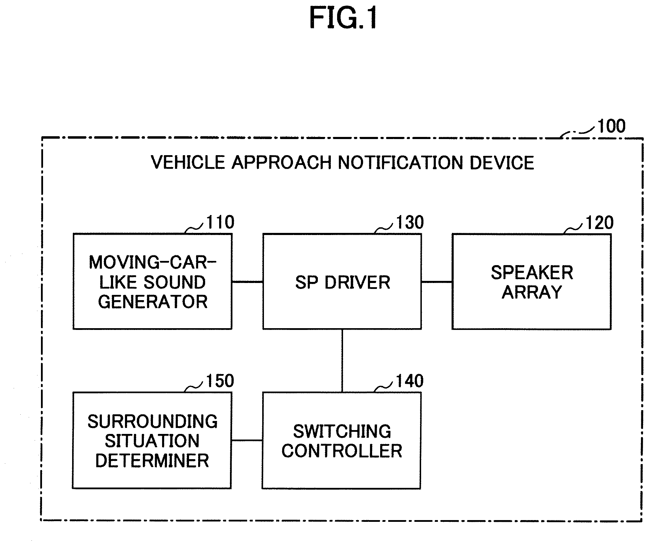

FIG. 1 is a diagram illustrating a configuration of a vehicle approach notification device according to an embodiment. A vehicle approach notification device 100 illustrated in FIG. 1 is mounted on a vehicle (for example, an electric vehicle) that emits less noise, and outputs an artificial moving-car-like sound to the surroundings of the vehicle to notify pedestrians or the like in the vicinity of the vehicle of approach of the vehicle. For this purpose, the vehicle approach notification device 100 includes a moving-car-like sound generator 110, a speaker array 120, a speaker (SP) driver 130, a switching controller 140, and a surrounding situation determiner 150.

The moving-car-like sound generator 110 generates a predetermined sound for notifying pedestrians or the like in the vicinity of the vehicle of approach of the vehicle. The generated sound is assumed to be an artificial moving-car-like sound of a vehicle for a purpose of notifying approach of a vehicle by sound; therefore, the sound is not necessarily similar to a moving-car-like sound and may be a notification sound other than a moving-car-like sound.

The speaker array 120 includes a plurality of speakers to which the generated sound that is output from the moving-car-like sound generator 110 is selectively input, and is set in the front portion of the vehicle. Each speaker is, for example, an ultrasonic speaker, and emits a sound in an audible band corresponding to the input generated sound.

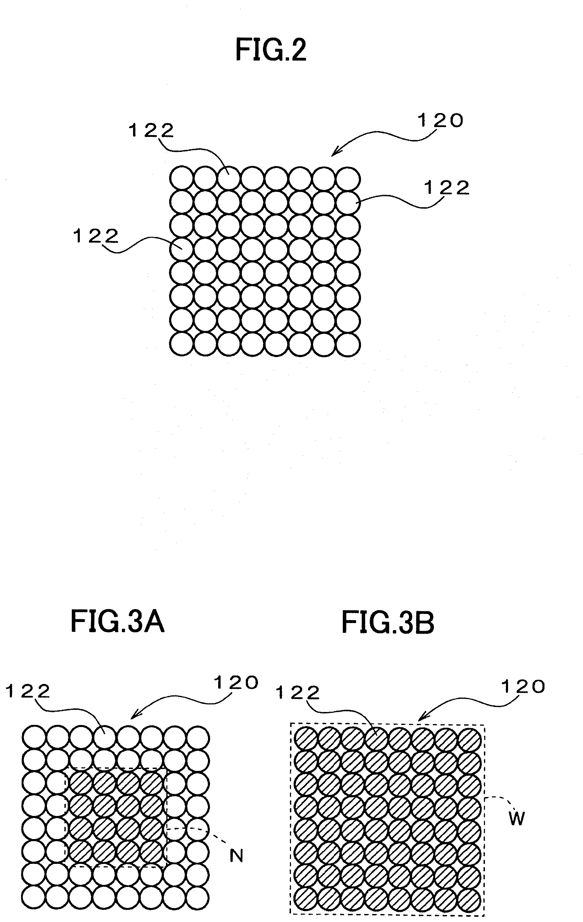

The speaker 122 (FIG. 2) reproduces audible sounds having narrow directivity by using waveform distortion caused by emitting two types of ultrasonic waves having a high sound pressure. When one of the frequencies of the ultrasonic waves (carriers) is f1, distortion components of 2f1, 3f1, 4f1, ..., which are integral multiples of f1, are generated. When the other one of the frequencies of the ultrasonic waves (carriers) is f2, distortion components of 2f2, 3f2, 4f2, ..., which are integral multiples of f2, are generated. In the case where both of the frequencies f1 and f2 are ultrasonic waves (sounds of frequencies higher than the human audible band), the distortion of the integral multiples of these frequencies is also higher than the audible band, and the distortion is therefore not heard by the human ears. However, in the case where ultrasonic waves of such two kinds of carriers are simultaneously radiated, components of difference tones (having a frequency of f2 - f1) and chords (having a frequency of f1 + f2) are generated. By setting the frequency of the difference tones (i.e., f2 - f1) to be within the audible band, the generated sound as an audible sound can be radiated from the ultrasonic speaker 122. For example, suppose f1 is 41 kHz and f2 is 40 kHz, it is possible to radiate a difference tone of f2 - f1 = 1 kHz.

FIG. 2 is a diagram illustrating an embodiment of a configuration of the speaker array 120. As illustrated in FIG. 2, the speaker array 120 of the present embodiment includes a total of 64 ultrasonic speakers 122 arranged in eight rows and eight columns, without any space therebetween.

The SP driver 130 can selectively input a signal obtained by amplifying the sound generated by the moving-car-like sound generator 110 to one or a plurality of speakers 122 included in the speaker array 120, and thereby switches the width of the area in which one or a plurality of speakers 122 that radiate a sound are arranged by changing the selection state.

The switching controller 140 instructs the SP driver 130 to switch the area (active area) that includes the speakers 122 radiating a sound in accordance with the width of the directivity of the sound output from the speaker array 120.

The surrounding situation determiner 150 determines a surrounding situation. A switching instruction by the switching controller 140 is issued based on a surrounding situation determined by the surrounding situation determiner 150.

The above-described moving-car-like sound generator 110 corresponds to an output sound generator, the SP driver 130 corresponds to a speaker switcher, the switching controller 140 corresponds to a switching instructor, and the surrounding situation determiner 150 corresponds to a surrounding situation determiner.

The vehicle approach notification device 100 of the present embodiment has such a configuration, and an operation of switching directivity between a wide range and a narrow range is described hereinafter.

FIGS. 3A and 3B are diagrams explaining a correspondence between the directivity and the speakers 122 to use. FIG. 3A illustrates an example of use of the speakers 122 in a case of widening directivity, and FIG. 3B illustrates an example of use of the speakers 122 in a case of narrowing directivity.

In order to widen directivity, it is necessary to reduce the number of speakers 122 that radiate a sound and to narrow the area where the speakers 122 are arranged. In FIG. 3A, a small number (4 × 4 = 16 at the center) of speakers 122 included in the narrow area N (second area) are selected, and a sound is radiated from these 16 speakers 122.

In order to narrow directivity, it is necessary to increase the number of speakers 122 that radiate a sound and to widen the area where the speakers 122 are arranged. In FIG. 3B, a large number (8 × 8 = 64 at the center) of speakers 122 included in the wide area W (first area) are selected, and a sound is radiated from these 64 speakers 122.

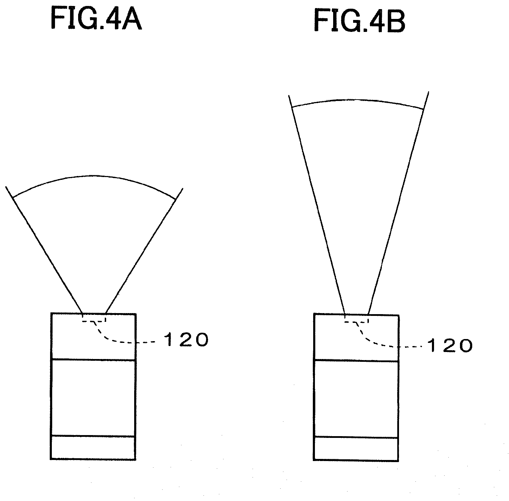

FIGS. 4A and 4B are explanatory diagrams of a sound field when directivity is switched. As illustrated in FIG. 4A, since wide directivity can be obtained by radiating a sound from a small number of speakers 122 included in the area N (FIG. 3A), a sound is radiated from the speaker array 120 installed in the front portion of the vehicle toward a wide-range space. In this case, the sound is diffused at a large scale and is easily attenuated along the radiation direction, and thus pedestrians or the like in a short distance can hear the sound.

As illustrated in FIG. 4B, on the other hand, since narrow directivity can be obtained by radiating sound from a large number of speakers 122 included in the area W (FIG. 3B), a sound is radiated from the speaker array 120 installed in the front portion of the vehicle toward a narrow-range space. In this case, the sound is diffused at a small scale and is less easily attenuated along the radiation direction, and thus pedestrians or the like in a distant area can hear the sound.

Thus, directivity of the speaker array 120 is widened by using the speakers 122 included in a narrow area N among a plurality of speakers 122 constituting the speaker array 120, and directivity of the speaker array 120 is narrowed by using the speakers 122 included in a wide area; it is thus possible to switch the output range of a sound radiated from the speaker array 120 by switching the areas N and W where the speakers 122 are arranged.

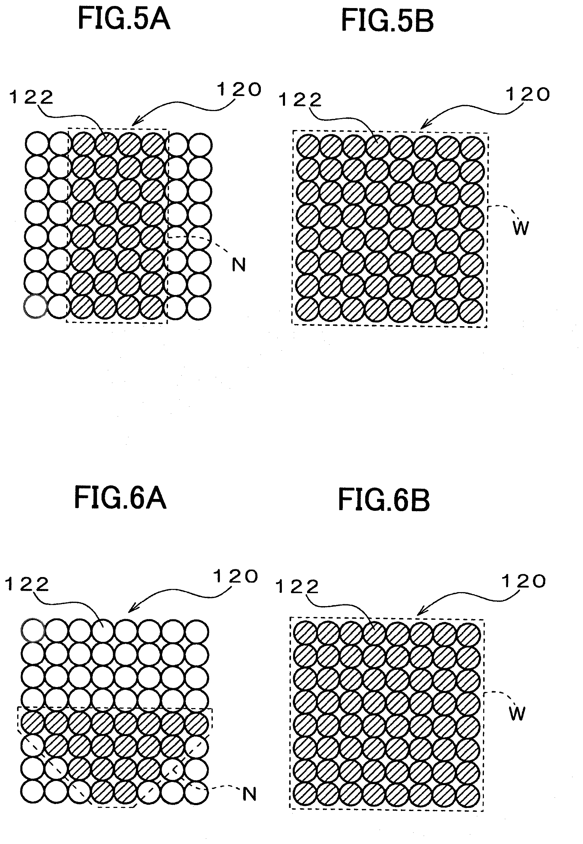

FIG. 5A is a diagram illustrating a modified example of the area N that is set in the speaker array 120. The area N having wide directivity illustrated in FIG. 5B includes 8 × 4 = 32 speakers 122. Through radiation of a sound from these speakers 122, the directivity in a horizontal direction can be widened and the directivity in a vertical direction can be narrowed. The area W having narrow directivity illustrated in FIG. 5B is the same as that illustrated in FIG. 3B.

FIG. 6A is a diagram illustrating another modified example of the area N that is set in the speaker array 120. The area N having wide directivity illustrated in FIG. 6A has a trapezoidal shape with a short lower side and a long upper side, and includes a total of 20 speakers 122. Through radiation of a sound from these speakers 122, the directivity in a horizontal direction can be narrowed in the vicinity of the upper side where eight speakers 122 are arranged in the horizontal direction, and the directivity in the horizontal direction can be widened in the vicinity of the lower side where two speakers 122 are arranged in the horizontal direction. The area W having narrow directivity illustrated in FIG. 6B is the same as that illustrated in FIG. 3B.

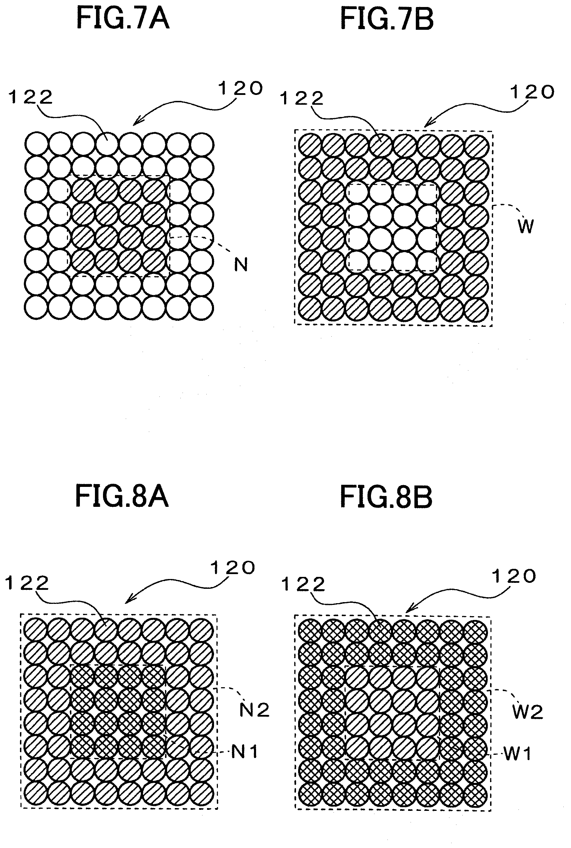

FIG. 7B is a diagram illustrating a modified example of the area W that is set in the speaker array 120. The area W having narrow directivity illustrated in FIG. 7B includes a total of 48 speakers 122 in two rows along the outer periphery. Through radiation of a sound from these speakers 122, the directivity can be narrowed similarly to the case illustrated in FIG. 3B. The area N having narrow directivity illustrated in FIG. 7A is the same as that illustrated in FIG. 3A.

FIGS. 8A and 8B are diagrams illustrating another modified example of each of the areas N and W that is set in the speaker array 120. The areas N1 and N2 illustrated in FIG. 8A having wide directivity include a total of 8 × 8 = 64 speakers 122, and among these, 4 × 4 = 16 speakers 122 in the central area N1 have high sound pressures, and 48 speakers 122 in the peripheral area N2 have low sound pressures. The areas W1 and W2 illustrated in FIG. 8B having narrow directivity include a total of 8 × 8 = 64 speakers 122, and among these, 4 × 4 = 16 speakers 122 in the central area W1 have low sound pressures, and 48 speakers 122 in the peripheral area W2 have high sound pressures. As described above, even when the number of speakers 122 to be used is the same, the directivity of the speaker array 120 can be widened by setting the central area N1 including the speakers 122 having high sound pressures, and the directivity of the speaker array 120 can be narrowed by setting the peripheral area W2 including the speakers 122 having high sound pressures.

Next, a specific example of the surrounding situation determiner 150 will be described.

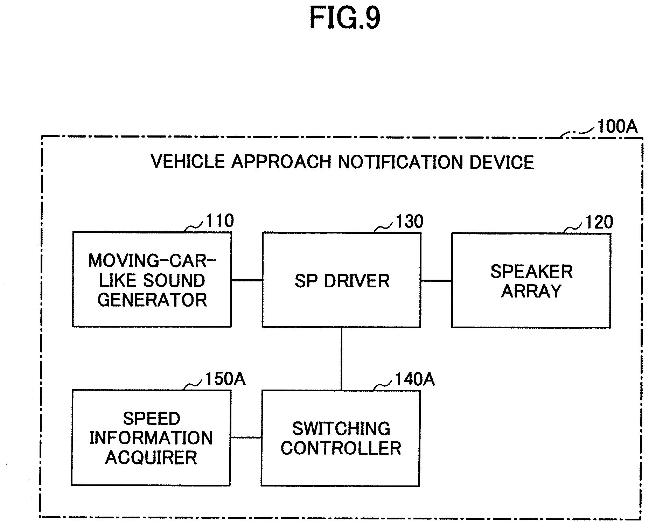

FIG. 9 is a diagram illustrating a specific example of a case where directivity of the speaker array 120 is switched in accordance with a traveling speed of a vehicle. The vehicle approach notification device 100A illustrated in FIG. 9 differs from the vehicle approach notification device 100 illustrated in FIG. 1 in that the surrounding situation determiner 150 is realized by a speed information acquirer 150A and the switching controller 140 is replaced with a switching controller 140A. The speed information acquirer 150A corresponds to a speed information acquirer.

The speed information acquirer 150A acquires information of a traveling speed a vehicle. For example, a traveling speed may be detected based on a vehicle speed pulse output at every predetermined traveling distance, or a traveling speed may be acquired from a vehicle controller or the like that performs a display operation of a speedometer or the like. Since a relative speed of a pedestrian or the like in the vicinity of the vehicle changes according to a traveling speed of the vehicle itself, a traveling speed of a vehicle is also considered as a "surrounding situation" in the present specification.

The switching controller 140A instructs the SP driver 130 to select the area W so that directivity of a sound output from the speaker array 120 is narrowed when a traveling speed acquired by the speed information acquirer 150A is high, and to select the area N so that directivity of a sound output from the speaker array 120 is widened when a traveling speed acquired by the speed information acquirer 150A is low.

Thus, when the vehicle travels at a low speed, the sound for informing the approach can be widely heard by pedestrians or the like in the vicinity of the vehicle, and when the vehicle travels at a medium speed or higher, the sound for informing presence of an approaching vehicle can be heard by pedestrians or the like who are present at a slightly distant place.

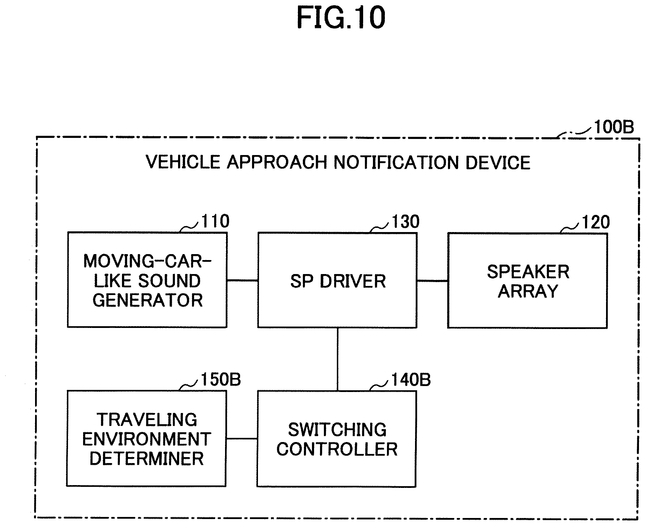

FIG. 10 is a diagram illustrating a specific example of a case where directivity of the speaker array 120 is switched depending on whether a vehicle is traveling in an urban area or in a suburban area. The vehicle approach notification device 100B illustrated in FIG. 10 differs from the vehicle approach notification device 100 illustrated in FIG. 1 in that the surrounding situation determiner 150 is realized by a traveling environment determiner 150B and the switching controller 140 is replaced with a switching controller 140B. The traveling environment determiner 150B corresponds to a traveling environment determiner.

The traveling environment determiner 150B determines whether a traveling position of the vehicle is in an urban area or a suburban area. For example, there may be a case where a vehicle navigation device that continuously or periodically determines whether the vehicle is located in an urban area or a suburban area is used as the traveling environment determiner 150B, or a case where the traveling environment determiner 150B obtains, from a vehicle navigation device, information indicating whether the vehicle is traveling in an urban area or a suburban area.

The switching controller 140B instructs the SP driver 130 to select the area W so that directivity of a sound output from the speaker array 120 is narrowed in response to the traveling environment determiner 150B determining that the traveling position of the vehicle is in a suburban area, and to select the area N so that directivity of a sound output from the speaker array 120 is widened in response to the traveling environment determiner 150B determining that the traveling position of the vehicle is in an urban area.

Thus, in an urban area where there is a high possibility that many pedestrians or the like are present in the vicinity of the vehicle, the pedestrians or the like in the vicinity of the vehicle as many as possible can be made to hear the sound for notifying approach of the vehicle, and in a suburban area where there are a relatively few people, the pedestrians or the like who are present at a slightly distant place can be made to hear the sound for notifying the pedestrians of the approach of the vehicle.

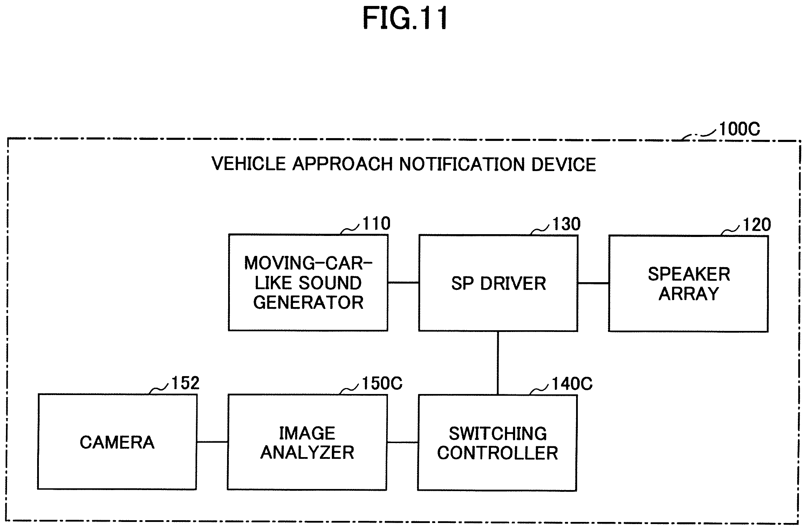

FIG. 11 is a diagram illustrating a specific example of a case where a surrounding situation is determined based on an image obtained by imaging the surrounding. The vehicle approach notification device 100C illustrated in FIG. 11 differs from the vehicle approach notification device 100 illustrated in FIG. 1 in that the surrounding situation determiner 150 is realized by a camera 152 and an image analyzer 150C and in that the switching controller 140 is replaced with a switching controller 140C. The camera 152 corresponds to an imager, and the image analyzer 150C corresponds to an image analyzer.

One or more cameras 152 are installed in a front portion or a side portion of the vehicle, and capture images of the surroundings including at least the front of the vehicle itself. The image analyzer 150C analyzes the situation around the vehicle itself such as the positions and the number of pedestrians present in the vicinity of the vehicle itself, the width of the traveling road, and the traveling lane, based on the image obtained through the imaging by the camera 152.

The switching controller 140C instructs the SP driver 130 to switch between the area W in which directivity of a sound output from the speaker array 120 is narrowed and the area N in which directivity of a sound output from the speaker array 120 is widened, based on a situation around the vehicle itself analyzed by the image analyzer 150C.

For example, as a result of analyzing the image, in the case where there are many pedestrians or the like in the vicinity of the vehicle, the area N in which directivity is widened is selected, and in the case where there are no pedestrians or the like, the area W in which the directivity is narrowed is selected. This allows the speaker system to ascertain a surrounding situation accurately and to switch the directivity of a sound radiated from the speaker array 120 between a wide range and a narrow range. The captured image may be analyzed to perform the same processing as that of the speed information acquirer 150A illustrated in FIG. 9 or the same processing as that of the traveling environment determiner 150B illustrated in FIG. 10.

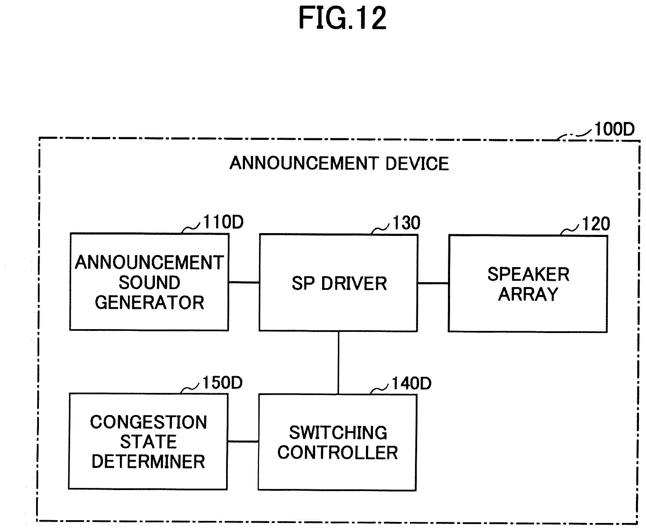

FIG. 12 is a diagram illustrating a modified example in which directivity of the speaker array 120 is varied according to a congestion state of a room. The announcement device 100D illustrated in FIG. 12 is installed in a sales area of a department store, for example, and radiates a predetermined announcement sound to some customers. The announcement device 100D has a configuration similar to that of the vehicle approach notification device 100 illustrated in FIG. 1, and differs from the vehicle approach notification device 100 in that the surrounding situation determiner 150 is realized by a congestion state determiner 150D, the moving-car-like sound generator 110 is replaced with an announcement sound generator 110D, and the switching controller 140 is replaced with a switching controller 140D. The announcement sound generator 110D corresponds to an output sound generator, and the congestion state determiner 150D corresponds to a congestion state determiner.

The congestion state determiner 150D determines the congestion state of customers in the vicinity (a specific area in the department store). This determination may be made by analyzing an image captured by the camera 152 as in the image analyzer 150C illustrated in FIG. 11, or may be made based on a detection result of a sensor provided at the entrance/exit for detecting the entrance/exit of a customer.

The switching controller 140D instructs the SP driver 130 to switch between the area W in which directivity of a sound output from the speaker array 120 is narrowed and the area N in which directional characteristics of a sound output from the speaker array 120 is widened, based on a congestion state around the vehicle itself analyzed by the congestion state determiner 150D.

For example, in the case where the number of customers in a specific area is small in a non-congested state, the area N in which directivity of an announcement sound to be radiated is widened is selected in order to attract customers; in the case where the number of customers in a specific area is large in a congested state, on the other hand, the area w in which directivity of an announcement sound to be radiated is narrowed is selected in order to make only intended customers hear the announcement. This allows the speaker system to switch directivity of a sound radiated from the speaker array 120 between a wide range and a narrow range in accordance with a congestion state of the surroundings.

The announcement device 100D illustrated in FIG. 12 can be used for announcement sounds other than an announcement sound of a department store. For example, in a museum, when many students are present in an exhibition room and the exhibition room is crowded due to there being a student tour or the like, the area N in which directivity of an announcement sound to be radiated is widened is selected, and in other cases, the area W in which directivity of an announcement sound to be radiated is narrowed is selected.

The present disclosure is not limited to the above-described embodiment, and various modifications can be made within the scope of the present disclosure. In the above-described embodiment, either wide directivity corresponding to the area N or narrow directivity corresponding to the area W is selected; however, the area N and the area W may be alternately switched at predetermined time intervals to repeat wide directivity and narrow directivity of a sound radiated from the speaker array 120. This allows a sound radiated from the speaker array 120 to be heard in both the near and distant spaces around the vehicle.

In the above-described embodiment, the speaker array 120 is configured using the ultrasonic speakers 122; however, the speaker array 120 may be configured using speakers other than ultrasonic speakers (speakers that directly output sound in the audible band).

As described above, according to the present disclosure, using speakers included in a small area among a plurality of speakers constituting a speaker array would widen directivity of the speaker array, and using speakers included in a large area would narrow directivity of the speaker array; it is thus possible to switch the output range of a sound radiated from the speaker array by switching the area where the speakers are arranged.

## Claims

1. A speaker system, comprising:
an output sound generator configured to generate a sound to be output;
a speaker array including a plurality of speakers to which the sound generated by the output sound generator can be selectively input;
a speaker switcher configured to switch one or more speakers to which the generated sound is input; and
a switching instructor configured to instruct the speaker switcher in accordance with a width of directivity of a sound that is to be output from the speaker array.

2. The speaker system according to claim 1, wherein
the speaker switcher is configured to selectively switch between a first area having a large area and a large number of speakers and a second area having a small area and a small number of speakers.

3. The speaker system according to claim 1 or 2, further comprising:
a surrounding situation determiner configured to determine a situation of surrounding, wherein
the switching instructor is configured to perform a switching instruction based on the situation of surrounding determined by the surrounding situation determiner.

4. The speaker system according to claim 3, wherein
the speaker system is mounted on a vehicle and configured to output a sound for notifying people in the vicinity of the vehicle of approach of the vehicle,
the surrounding situation determiner is a speed information acquirer configured to acquire a traveling speed of the vehicle, and
the switching instructor is configured to perform a switching instruction to select the first area so that directivity of a sound output from the speaker array is narrowed when the traveling speed acquired by the speed information acquirer is high, and to select the second area so that directivity of a sound output from the speaker array is widened when the traveling speed acquired by the speed information acquirer is low.

5. The speaker system according to claim 3 or 4, wherein
the speaker system is mounted on a vehicle and configured to output a sound for notifying people in the vicinity of the vehicle of approach of the vehicle,
the surrounding situation determiner is a traveling environment determiner configured to determine whether a traveling position of the vehicle is in an urban area or in a suburban area, and
the switching instructor is configured to instruct the speaker switcher to select, in a case of the traveling environment determiner determining that the traveling position of the vehicle is in a suburban area, the first area so that directivity of a sound output from the speaker array is narrowed, and select, in a case of the traveling environment determiner determining that the traveling position of the vehicle is in an urban area, the second area so that the directivity of a sound output from the speaker array is widened.

6. The speaker system according to one of claims 2 - 5, wherein
the switching instructor is configured to instruct a switching to alternately select the first area and the second area.

7. The speaker system according to one of claims 3 - 6,
the surrounding situation determiner includes an imager configured to capture an image of surroundings and an image analyzer configured to analyze a situation of surrounding based on the image captured by the imager, and
the switching instructor is configured to instruct the speaker switcher to select one of the first area or the second area based on the situation of surrounding analyzed by the image analyzer.

8. The speaker system according to one of claims 3 - 7,
the surrounding situation determiner is a congestion state determiner configured to determine a congestion state of surroundings, and
the switching instructor is configured to instruct the speaker switcher to select one of the first area or the second area based on the congestion state of the surroundings determined by the congestion state determiner.
